# EUROPÄISCHE PATENTANMELDUNG

(11) **EP 4 552 732 A2**
(43) Veröffentlichungstag der Anmeldung: **14.05.2025**
(21) Anmeldenummer: 25167744.9
(22) Anmeldetag: 30.10.2020
(51) Int. Cl.: B01D 71/68

(54) **VERFAHREN UND VORRICHTUNG ZUR GLEICHSPANNUNGSGESTEUERTEN ADSORPTION UND DESORPTION AN GELADENEN MEMBRANEN**

(30) Priorität: 01.11.2019 EP 19206740
(62) Teilanmeldung aus: 20796842.1
(71) Anmelder: i3 Membrane GmbH, 22761 Hamburg (DE)
(72) Erfinder: Brinke-Seiferth, Stephan, Hamburg (DE); Fiedler, Jan, Dresden (DE); Schmitt, Florian, Oldenburg (DE)
(74) Vertreter: Raffay & Fleck

(57) **Zusammenfassung**

Die Erfindung betrifft Membranen zum Trennen, beseitigen und/oder Aufkonzentrieren. Die Aufgabe besteht darin, die Moleküle einfach und zuverlässig zu adsorbieren und die Desorption von an Membranen chromatographisch gebundenen, adsorbierten Zielmolekülen zu vereinfachen und möglichst ohne eine Zugabe von stark ionenhaltigen Stoffen wie Säuren, Laugen oder Salzen zu ermöglichen. Zusätzlich besteht eine Aufgabe darin, einen gut messbaren Wert zu entwickeln, der eine Angabe zur derzeitigen und/oder verbleibenden Bindungskapazität der Membran während des Adsorptionsprozesses und/oder dessen Steuerung erlaubt.

Diese Aufgabe wird erfindungsgemäß dadurch gelöst, dass die Adsorption an einer geladenen Membran erfolgt und die Desorption durch physikalische, elektromagnetische und/oder durch eine Erzeugung von elektrischen Feldern erreicht wird. Dies wird insbesondere realisiert, indem eine dünne Metallschicht auf eine oder beide Seiten einer positiv oder negativ geladenen Membran aufgebracht wird und zur Desorption eine Spannung angelegt wird.

## Beschreibung

Membranen, insbesondere Polymermembranen werden in der Regel zum mechanischen Rückhalt von Stoffen, Biomolekülen, Viren und Bakterien genutzt. Die Rückhalterate wird über die Porengröße bestimmt und die Durchflussrate wird von der Porosität, den Anteil der Poren an der Membranmatrix bestimmt.

Aus den Polymermembranen wurden sogenannte chromatographische Membranen entwickelt. Diese besitzen neben den mechanischen Rückhalteeigenschaften zusätzliche Eigenschaften, die zu einer Adsorption von geladenen Stoffen führen. Diese Membranen weisen eine bestimmte Konditionierung der Oberfläche auf oder es werden durch die Einbindung von Stoffen chromatographische Eigenschaften erzeugt.

Aus der EP 0 860 888 A1 ist es bekannt, eine Membran mit mittels eines Metallionenstrahls mit Metall zu beschichten.

Aus der WO 2018/122,315 A1 und der EP 3 115 099 A1 ist es bekannt, an eine metallbeschichtete Membran eine Spannung gegenüber einer Gegenelektrode anzulegen.

Aus der JP H 01301879A ist es bekannt, lonenaustauchermembran mittels Galvanisierung mit Metall zu beschichten.

In WO 00/50161 ist eine positiv geladene Membran beschrieben. Die Ladung der Oberfläche der porösen Membranmatrix bestehend aus beispielsweise Polyaromaten, Polysulfonen, Polyolefinen, Polystyrenen, Polyamiden, Polyimiden, Flouorpolymeren, Polycarbonaten, Polyestern, Cellulose Acetat oder Celluslose Nitrat erfolgt durch Vernetzung dieser mit einer Polymerstruktur, die angehängte positiv geladene kationische Gruppen aufweist, wie zum Beispiel quaternäre Amoniumgruppen. Diese werden über kovalente Bindung an die Polymerstruktur der Membran gebunden. Diese sogenannte chromatographische Membran weist nun eine positive Ladung auf, die unabhängig vom pH Wert einer zu filtrierenden Lösung positiv bleibt. Mittels dieser positiv geladenen Oberfläche können nun negativ geladene Biomoleküle wie beispielsweise Albumin (BSA) adsorptiv gebunden werden. In der WO 00/50161 ist beschrieben, dass eine Bindungskapazität auf Basis von BSA von 25 mg/ml (ml Membranvolumen) oder mehr erreicht werden kann.

Die Bindungskapazität kann durch ermitteln der adsorbierten Stoffmenge bestimmt werden. Dies kann beispielsweise durch Filtrierung durch die Membran und Bestimmung der Konzentration vor und nach der Passage durch die Membran und Bestimmung des Flusses durch die Membran erfolgen.

Die Konzentration kann auf verschiedene bekannte Arten bestimmt werden. Sie kann beispielsweise photometrisch bestimmt werden.

Dazu kann ein UV/VIS-Spektralphotometer, z.B. Aqualytic Typ XD7000, mit - Wellenlängenbereich zwischen 190 und 1100 nm, einer Auflösung von Auflösung von 1 nm, einer photometrische Auflösung von: Absorption: 0,001 und/oder Transmission: 0,1 % eingesetzt werden.

Es kann beispielsweise eine Inline-Messung des Filtrats, das über eine feine Kapillare durch die Messzelle (Küvette) geführt wird, während des laufenden Verfahrens durchgeführt werden und dadurch nachgewiesen werden, wie lange die zugeführten Proteine vollständig zurückgehalten werden, dass Filtrat also proteinfrei ist. Wird eine Lösung mit bekannter Konzentration zugeführt und die Durchflussgeschwindigkeit durch die Membran bestimmt kann damit bestimmt werden, welche Menge die Membran adsorbieren kann, bevor es zum Durchbruch kommt. Diese Menge bezogen auf das Membranvolumen ist insbesondere die Bindungskapazität.

In der WO 00/50160 ist eine negativ geladene Membran beschrieben. Die Ladung der Oberfläche der porösen Membranmatrix bestehend aus beispielsweise Polyaromaten, Polysulfonen, Polyolefinen, Polystyrenen, Polyamiden, Polyimiden, Flouorpolymeren, Polycarbonaten, Polyestern, Cellulose Acetat oder Celluslose Nitrat erfolgt durch Vernetzung dieser mit einer Polymerstruktur, die angehängte negativ geladene anionische Gruppen aufweist, wie zum Beispiel Hydroxyl-Gruppen. Diese werden über kovalente Bindung an die Polymerstruktur der Membran gebunden. Diese sogenannte chromatographische Membran weist nun eine negative Ladung auf, die unabhängig vom pH Wert einer zu filtrierenden Lösung positiv bleibt. Mittels der negativen Ladung können nun positiv geladene Stoffe oder Proteine gebunden werden. WO 00/50160 beschreibt eine Bindungskapazität von Lysozyme von 25mg/ml oder mehr.

In AU 2014277783 B2 ist ein Membranaufbau beschrieben, der aus zwei Membranen-Schichten besteht zwischen denen Silizium Nanopartikel in einer Masse gebunden positioniert sind. Die beiden Membran Schichten können positiv oder negativ oder eine positiv und die andere negativ geladen sein. Auch die in einer Menge gebundenen Siliziumpartikel können eine Ladung aufweisen.

Die in diesen Beispielen aufgeführten Produkte dienen dazu, Biomoleküle zu trennen. Beispielsweise können Viren von Proteinen getrennt werden. Dabei wird ein pH Wert der zu filtrierenden Lösung gewählt, der dem isoelektrischen Punkt eines zu gewinnenden Proteins entspricht. Filtriert man diese Lösung über eine positiv geladenen Membran deren Poren groß genug sind, damit Proteine nicht mechanisch zurückgehalten werden (beispielsweise 0,2 µm, 0,4 µm oder 0,8 µm), so passieren die Proteine diese Membran, da diese am isoelektrischen Punkt keine Ladung aufweisen. Alle weiteren Stoffe, die bei dem eingestellten pH Wert eine negative Ladung aufweisen, wie beispielsweise Viren, werden nun adsorptiv gebunden. Mit diesen chromatografischen Eigenschaften lassen sich Proteine aufreinigen.

Auch können Biomoleküle über eine positiv oder negativ geladene Membran aufkonzentriert werden. Dabei werden die Zielmoleküle adsorptiv gebunden und damit aus einer Lösung entfernt.

In einem weiteren Schritt werden durch Veränderung des pH Wertes oder über eine stark salzhaltige Lösung, die nach einer Adsorption der Zielmoleküle, durch die Membran gepumpt wird, die Zielmoleküle wieder desorbiert. Dies kann schrittweise passieren. So kann der Salzgehalt der Lösung schrittweise gesteigert werden. Damit werden zunächst Stoffe mit einer schwachen Ladung zuerst von den Bindungsstellen der Membran durch die Salz-Ionen verdrängt. Andere Stoffe mit stärkerer Bindung benötigen eine höhere Konzentration der Salz-Ionen, um von den Bindungsstellen der Membran gelöst zu werden. Ähnlich kann auch der pH-Wert, der die Konzentration an OH- oder H + -Ionen angibt, schrittweise verändert werden und zu einer schrittweisen Ablösung von adsorbierten Molekülen unterschiedlicher Ladungsstärke genutzt werden. Über die pH Wert Veränderung oder durch die Zugabe von großer Konzentration von Salzmolekülen (beispielsweise 1 Molare NaCl-Lösung) verdrängen die große Anzahl geladener Ionen die Zielmoleküle von den Bindungsstellen.

Die chromatographischen Membranen weisen neben den Vorteilen einer zum mechanischen Rückhalt zusätzlichen adsorptiven Eigenschaften gewisse Nachteile auf. So können adsorbierte Stoffe nur wieder desorbiert werden, wenn Chemikalien hinzugefügt werden, die die vorhandene Bindungskraft der gebundenen geladen Moleküle übersteigt. Dies geschieht in der Regel durch eine starke Veränderung des pH-Wertes oder durch Zugabe einer stark salzhaltigen Lösung. Durch die lonenkonzentration- und stärke werden die gebundenen Moleküle ersetzt durch Salzionen oder durch Wasserstoff- oder Hydroxid-Ionen. Es ist hiernach eine Spülung notwendig, um die pH-Wertänderung oder den hohen Salzgehalt wieder auszuspülen und damit die Membran in ihren chromatographischen Eigenschaften wieder nutzungsfähig ist. Zusätzlich muss die Lösung der gewonnenen Zielmoleküle auch neutralisiert werden und/oder von ihrer salzhaltigen Fracht befreit werden. Zielmoleküle wie beispielsweise empfindliche Biomoleküle können durch eine starke pH-Wertveränderung oder hohe Salzgehalte Schäden erleiden. Dies setzt auch eine Limitierung des chromatographischen Membranverfahrens. Je größer die adsorptiven Bindungskräfte der Membran, desto stärker müssen die Ionengehalte des Desorptionsmedium sein. Allerdings führen zu starke Säuren und Laugen oder Salzkonzentration zu einer zunehmenden Schädigung von zu trennenden Biomolekülen.

Ein weiterer Nachteil ist die Festlegung der Bindungskapazität bis zum Durchbruch bzw. der Beendigung nach Wiedergewinnung. Ist die Konzentration der Lösung der Zielmoleküle nicht bekannt, sind zusätzliche Messverfahren wie UV/VIS-Spektralphotometrie oder Leitfähigkeitsmessung des Filtrats notwendig, um ein Durchbruch von Zielmolekülen zu vermeiden.

Auch ist es bekannt, an metallische Membranen eine Spannung anzulegen. Dazu muss aber konstant und zuverlässig eine Spannung über die aktive Fläche anliegen, um eine Filterwirkung je nach Ausgestaltung zu erreichen oder zu unterstützen. Zudem ist es, beispielsweise aus der EP 3 115 099 A1 oder WO 2018/122315 A1 bekannt, an metallisch beschichtete Polymermembranen eine Spannung anzulegen. Auch ist es aus der EP 0 860 888 A1 bekannt, Metallmembranen mit einer dünnen Metallschicht zu beschichten.

Die erfinderische Aufgabe besteht darin, die Moleküle einfach und zuverlässig zu adsorbieren und die Desorption von an Membranen chromatographisch gebundenen, adsorbierten Zielmolekülen zu vereinfachen und möglichst ohne eine Zugabe von stark ionenhaltigen Stoffen wie Säuren, Laugen oder Salzen zu ermöglichen. Zusätzlich besteht eine Aufgabe darin, einen gut messbaren Wert zu entwickeln, der eine Angabe zur derzeitigen und/oder verbleibenden Bindungskapazität der Membran während des Adsorptionsprozesses und/oder dessen Steuerung erlaubt.

Diese Aufgabe wird erfindungsgemäß dadurch gelöst, dass die Adsorption an einer, insbesondere chemisch, geladenen Membran erfolgt und die Desorption durch physikalische, elektromagnetische und/oder durch eine Erzeugung von elektrischen Feldern erreicht wird. Dies wird insbesondere realisiert, indem eine dünne Metallschicht auf eine oder beide Seiten einer, insbesondere chemisch, positiv oder negativ geladenen Membran aufgebracht wird. Eine solche geladene Membran weist insbesondere ohne Anlegung einer Spannung eine Ladung auf. Die Metallschicht ist insbesondere so dünn, dass diese die Porosität nicht oder kaum verändert aber insbesondere so dick, dass eine durchgehende Leitfähigkeit dieser Schicht gewährleistet ist. Vorzugsweise wird/werden Metall(e) verwendet, das/die sich nicht oder nur sehr schwer oxidieren lassen wie beispielsweise Gold, Platin, Palladium.

Die Metallschicht(en) dient/en nun als Elektrode(n), die mit einer Gleichspannung geladen werden kann/können. Die Höhe einer angelegten Gleichspannung wird vorzugsweise so gewählt, dass durch die erzeugten elektrischen Felder eine vollständige Desorption der adsorptiv gebundenen Moleküle erreicht wird. Gelöst wir die Aufgabe verfahrensgemäß insbesondere zudem durch ein Verfahren zur Separation mittels Adsorption und Elektrodesorption umfassend die folgenden Schritte
a. Bereitstellen einer, insbesondere chemisch, geladenen Polymermembran mit einer ersten flächigen und porösen Beschichtung aus Metall zumindest auf einer ersten Seite der Polymermembran, insbesondere als Arbeitselektrode, und Bereitstellen einer Gegenelektrode, insbesondere als zweite flächige, poröse Beschichtung auf der anderen Seite der Membran oder Bereitstellen einer Gegenelektrode unabhängig von der Membran ;
b. I. In Kontakt bringen der geladenen Polymermembran mit flächiger und poröser Beschichtung aus Metall und der Gegenelektrode mit mindestens einem ersten Fluid, insbesondere Durchströmen der Membran mit dem mindestens einen ersten Fluid, wobei das mindestens eine erste Fluid insbesondere eine Lösung mit geladenen, insbesondere mindestens zwei unterschiedlichen, Soffen, insbesondere Biomolekülen, zur Adsorption an der geladenen Oberfläche (inneren und/oder äußeren) der Membran, insbesondere ohne das Aufbringen einer zusätzlichen Spannung an der Arbeitselektrode oder unter Aufbringen einer der Ladung der Membranladung gleich geschalteten Spannung zur Unterstützung der Adsorptionsvorgänge, darstellt.
b.II Insbesondere Adsorbieren des mindestens einen geladenen Stoffs an der Membran, insbesondere während des Filtrieren der Lösung, insbesondere bis eine gewisse, insbesondere vorbestimmte, Bindungskapazität und/oder ein vorbestimmter Anteil der Bindungskapazität der geladenen Membran zur Adsorption genutzt wurde.
c. Anlegen einer Gleichspannung zwischen der Beschichtung aus Metall der geladenen Polymermembran (Arbeitselektrode) und der Gegenelektrode, wobei insbesondere die Gleichspannung der Ladung der Polymermembran entgegengerichtet angelegt wird.
d. In Kontaktbringen, insbesondere Durchströmen, der Membran mit dem mindestens einem ersten Fluid und/oder einem zweiten Fluid, das insbesondere keine Biomoleküle zur Adsorption enthält. Insbesondere wird auch die Gegenelektrode mit dem Fluid in Kontakt gebracht, mit dem die Membran in Kontakt gebracht wird.
e. Insbesondere Steuerung der Spannung, insbesondere Steigerung der Spannung, die der Ladung der Membran entgegengerichtet ist zur definierten und, insbesondere zeitlich nacheinander schrittweisen, Desorption von, insbesondere mindestens zwei unterschiedlichen, Stoffen, insbesondere Biomolekülen, die insbesondere unterschiedliche Ladungsstärken aufweisen.

Das Volumen kann beispielsweise ein Gefäß sein. Das Fluid ist insbesondere eine Flüssigkeit und/oder insbesondere ein Solvent mit mindestens einem darin enthaltenden, insbesondere gelösten Stoff, insbesondere Molekül. Bei der ersten Flüssigkeit kann es sich beispielsweise um eine Lösung mit Proteinen oder Peptiden oder Nukleinsäuren handeln.

Das weitere Fluid ist insbesondere eine Flüssigkeit und/oder insbesondere ein Solvent, insbesondere ein reines Solvent. Insbesondere wird das erste Fluid aus dem ersten Volumen entfernt und/oder die Membran aus dem ersten Volumen entfernt und/oder erstes Fluid und Membran voneinander getrennt. Das Entfernen wird dabei insbesondere durch Ablassen des ersten Fluids und/oder Ausspülen des Fluids bewirkt. Somit ist es nicht erforderlich, dass das erste Fluid vollständig entfernt wird, Rückstände sind in jedem Fall tolerable, können aber auch weggespült werden.

Das erste Fluid kann aber mit dem weiteren Fluid vermischt oder ersetzt werden. Bevorzugt wird das Einfüllen des weiteren Fluids in das erste Volumen nach dem Ablassen und ggf. Ausspülen des ersten Fluids und oder das Überführen der Membran vom ersten Volumen in ein zweites Volumen, wobei das zweite Volumen mit dem weiteren Fluid gefüllt ist und/oder gefüllt wird.

Insbesondere erfolgt in Schritt b, insbesondere b.I und/oder b.II, die Adsorption des mindestens einem im ersten Fluid enthaltenden Stoff. Dies muss nicht, kann aber vollständig erfolgen. Die Adsorption eines Teils kann ausreichen. Die Adsorption erfolgt dabei insbesondere auf Grund der Ladung der Membran und/oder auf Grund der Ladung der Membran und der zusätzlich angelegten Spannung.

In Schritt c, d und/oder e erfolgt insbesondere eine teilweise oder vollständige Desorption des in Schritt b Adsorbierten, insbesondere des mindestens einen Stoffs. Die Desorption erfolgt dabei in das zweite Fluid oder in ein Gemisch aus erstem und zweitem Fluid.

Schritt d und/oder e erfolgt dabei zumindest auch während die geladenen Polymermembran mit flächiger und poröser Beschichtung aus Metall und die Gegenelektrode mit dem ersten und/oder dem weiteren Fluid, insbesondere in dem ersten und/oder zweiten Volumen in Kontakt ist. Schritt d und/oder e kann auch schon vor Schritt c begonnen werden.

Zur Desorption von zuvor adsorptiv gebundenen Biomolekülen wird bei einer, insbesondere chemisch, positiv geladenen (gechargten) Membran die Gleichspannung insbesondere so angelegt, dass die Beschichtung aus Metall, die mit der Membran verbunden ist, als Arbeitselektrode mit negativer Spannung versorgt wird. Dies erfolgt beispielsweise durch Verbinden der Arbeitselektrode mit dem Minuspol einer Spannungsquelle und der Gegenelektrode mit dem Pluspol der Spannungsquelle. Bei einer, insbesondere chemisch, negativ geladenen (gechargten) Membran wird die Gleichspannung insbesondere so angelegt, dass die Beschichtung aus Metall, die mit der Membran verbunden, als Arbeitselektrode mit positiver Spannung versorgt wird. Dies erfolgt beispielsweise durch Verbinden der Arbeitselektrode mit dem Pluspol einer Spannungsquelle und der Gegenelektrode mit dem Minuspol der Spannungsquelle.

Insbesondere handelt es sich bei dem Verfahren um ein Verfahren zur chromatographischen Trennung von geladenen Molekülen, insbesondere um eine Ionenaustauschchromatographie oder kurz Ionenchromatographie. Dabei werden maßgeblich Biomoleküle anhand ihrer Ladung getrennt. Ziel ist es eine bessere Trennung und/oder Bestimmung der einzelnen Biomoleküle durch Auftrennung nach Ladung zu erhalten (Analytik) oder bestimmte Biomoleküle aus einer Lösung als Wertstoff zu gewinnen. Die gewonnenen Biomoleküle gleicher Ladung werden dabei insbesondere aufkonzentriert. Beispielsweise wird der mindestens eine im ersten Fluid enthaltende geladene Soff aus dem ersten Fluid gewonnen und in das zweite Fluid überführt und/oder im ersten und/oder zweiten Fluid aufkonzentriert.

Bei beidseitiger Metallbeschichtung der Membran, also einer ersten und einer zweiten Beschichtung aus Metall, zwischen denen die Polymermembran angeordnet ist, kann die erste Beschichtung als Arbeitselektrode und die zweite Beschichtung als Gegenelektrode verwendet werden.

Mit Vorteil wird das Verfahren insbesondere so durchgeführt und/oder Vorrichtung so ausgebildet, dass das erste Fluid in Schritt b, insbesondere b.I und/oder b.II, so fließt, dass es von der Arbeitselektrode zur Gegenelektrode strömt, die Arbeitselektrode liegt dann upstream, die Gegenelektrode downstream.

Vorteilhafterweise wird das Verfahren insbesondere so durchgeführt und/oder Vorrichtung so ausgebildet, dass das erste Fluid in Schritt c, d und/oder e so fließt, dass es von der Arbeitselektrode zur Gegenelektrode strömt. Bei einer, insbesondere chemisch, positiv geladenen (gechargten) Membran wird die Gleichspannung in Schritt b, insbesondere b.I und/oder b.II, insbesondere so angelegt, dass die Arbeitselektrode, mit einer positiven Gleichspannung versorgt wird. Dies geschieht insbesondere solange ein Adsorptionsvorgang stattfindet. Der Adsorptionsvorgang durch die positiv geladenen Membran kann auch ohne Spannungsversorgung der Arbeitselektrode stattfinden, kann durch die zusätzliche Spannung aber verstärkt werden.

Während Schritt c, d und/oder e und/oder zur Desorption wird die Arbeitselektrode bei, insbesondere chemisch, positiv geladener (gechargten) Membran mit negativer Spannung versorgt. Diese kann beispielsweise schrittweise von -10 mV bis - 3 Volt geschehen, um verschiedenen Biomoleküle ihrer Ladung nach nacheinander zu desorbieren, und dadurch insbesondere zu separieren, insbesondere in unterschiedliche zweite Fluide oder unterschiedliche Volumen des zweiten Fluids. Es kann gleichwohl auch sofort eine Spannung von - 3 Volt an die Arbeitselektrode angelegt werden, so dass eine kurzfristige Desorption aller adsorbierten Biomoleküle erfolgt.

Bei einer, insbesondere chemisch, negativ geladenen (gechargten) Membran wird die Gleichspannung in Schritt b, insbesondere b.I und/oder b.II, insbesondere so angelegt, dass die Arbeitselektrode (Beschichtung aus Metall, die mit der Membran verbunden ist), mit einer negativen Gleichspannung versorgt wird. Dies geschieht insbesondere solange ein Adsorptionsvorgang stattfindet. Der Adsorptionsvorgang durch die, insbesondere chemisch, negativ geladenen (gechargten) Membran kann auch ohne Spannungsversorgung der Arbeitselektrode stattfinden, kann durch die zusätzliche Spannung aber verstärkt werden.

Während Schritt c, d und/oder e und/oder zur Desorption wird die Arbeitselektrode mit positiver Spannung versorgt. Diese kann beispielsweise schrittweise von + 10 mV bis + 3 Volt geschehen, um verschiedenen Biomoleküle ihrer Ladung nach nacheinander zu desorbieren, und dadurch insbesondere zu separieren, insbesondere in unterschiedliche zweite Fluide oder unterschiedliche Volumen des zweiten Fluids.. Es kann gleichwohl auch sofort eine Spannung von + 3 Volt an die Arbeitselektrode angelegt werden, so dass eine kurzfristige Desorption aller adsorbierten Biomoleküle erfolgt.

Die Beschichtung ist insbesondere stoffschlüssig mit der Polymermembran verbunden und/oder direkt auf diese aufgebracht. Dies kann beispielsweise durch Aufdampfen oder durch Magnetronsputtern geschehen. Die Dicke der Metallschicht ist typischerweise zwischen 20 nm und 50 nm stark, kann aber auch zwischen 5 nm und 200 nm betragen.

Insbesondere handelt es sich bei der, insbesondere chemisch, geladenen Polymermembran mit flächiger und poröser Beschichtung aus Metall um eine Anionen- oder Kationenaustauscherpolymermembran.

Insbesondere wird das erste Fluid zwischen Beginn des Schritts b und Begin des Schritts c durch die Membran geführt (filtriert). Die Filtationsgeschwindigkeit kann beispielsweise zwischen 0,01 ml/(cm2*min*bar) und 40 ml/(cm2*min*bar) betragen. Insbesondere wird für mindestens eine Sekunde filtriert und/oder wird Schritt b und/oder Schritt d jeweils mindestens 1 Sekunde, insbesondere mindestsens 30 Sekunden, lang durchgeführt.

Der Vorteil, dass bei einer, insbesondere chemisch, positiven geladenen (gechargten) Membran die Gleichspannung insbesondere so angelegt wird, dass die Arbeitselektrode (Beschichtung aus Metall, die mit der Membran verbunden ist), die das Fluid zuerst passiert (upstream), mit einer positiven Gleichspannung versorgt wird, liegt darin, dass die Bindungskapazität der geladenen (gechargten) Membran mittels dieser der Ladung der Membran gleich gerichteten Spannung gesteigert werden kann.

Der Vorteil, dass bei einer, insbesondere chemisch, negativ geladenen (gechargten) Membran die Gleichspannung insbesondere so angelegt wird, dass die Arbeitselektrode (Beschichtung aus Metall, die mit der Membran verbunden ist), die das Fluid zuerst passiert (upstream), mit einer negativen Gleichspannung versorgt wird, liegt darin, dass die Bindungskapazität der geladenen (gechargten) Membran mittels dieser der Ladung der Membran gleich gerichteten Spannung gesteigert werden kann.

Bevorzugt liegt der Betrag der ersten und/oder zweiten Gleichspannung in einem Bereich, in dem das Fluid nicht elektrolytisch zersetzt wird, insbesondere bei mindestens 10mV, insbesondere liegt ihr Betrag im Bereich von 10 mV bis 3V. Dies ist insbesondere bei wässrigen Fluiden vorteilhaft. Kurzzeitig, insbesondere maximal für 3 Sekunden und/oder mindestens für 10ms, kann aber auch eine höhere Spannungen von bis zu 50 Volt angelegt werden.

Bevorzugt wird die die Gegenelektrode entweder durch eine weitere flächige, poröse Beschichtung aus Metall auf einer zweiten, der ersten Seite gegenüberliegenden Seite gebildet wird, wobei die flächigen Beschichtungen aus Metall gegeneinander durch die Polymermembran isoliert sind, oder durch eine unter Zwischenlage eines isolierenden und permeablen Spacers angeordnete permeable Elektrode, insbesondere gebildet durch ein metallisches Netz, gebildet.

Dadurch kann insbesondere bei der Messung und/oder Steuerung des Stroms eine definierte und stabile Anordnung geschaffen werden, die äußere Einflüsse minimiert und reproduzierbar erzeugt werden kann.

Bevorzugt werden zur Beschichtung Metalle verwendet, die sich nicht oder nur sehr schwer oxidieren lassen. So werden Metalle wie Gold, Platin oder Palladium verwendet.

Bevorzugt ist die Porosität der Polymermembran mit Beschichtung aus Metall bezogen auf die initiale Bubble Point Pore und/oder die mittlere Porengröße gegenüber der unbeschichteten Polymermembran zwischen 0,01 % und 10 %, insbesondere 0,01 und 1 % verringert und/oder beträgt die Dicke der Beschichtung aus Metall 1 bis 100 nm und/oder liegt die Porengröße der unbeschichteten Polymermembran insbesondere im Bereich von 0,01 µm und 15µm. Dies ermöglicht eine zuverlässige metallische Beschichtung und eine verhältnismäßig geringe und gleichbleibende Veränderung der physikalischen Membraneigenschaften.

Bei dem Metall handelt es sich insbesondere um Edelmetall, insbesondere Gold, Silber und/oder Platin.

Mit Vorteil weist die Polymermembran mit Beschichtung aus Metall poröse Durchgänge auf. Diese können für Polymermembranen aus Polysulfon, Polyethersulfon, Polyamid etc. schwammartig sein. Das heißt, es handelt sich bei den Poren nicht um tunnelförmige Durchgänge sondern weist die Membran im inneren eine Porenförmige Struktur auf und/oder sind ist die Wandfläche eines Durchgangs gegenüber einem tunnelförmigen Durchgang mit derselben Durchgangsweite um mindestens den Faktor 100, insbesondere mindestens den Faktor 1000, erhöht. Insbesondere sind die im Inneren der Membran liegenden Poren zumindest, insbesondere nur, teilweise mit der Beschichtung aus Metall beschichtet. Dadurch lässt sich die aktive Oberfläche erhöhen.

Mit Vorteil weist die, insbesondere chemisch, geladene Membran eine Bindungskapazität von mindestens 25 mg Lysozyme oder Albumin, insbesondere BSA, pro ml Membranvolumen auf. Darunter ist insbesondere zu verstehen, dass die Membran mit der Metallbeschichtung auf einer oder beiden Seiten eine solche Menge des jeweils genannten Moleküls adsorbieren kann. Das Membranvolumen ist das Volumen, dass eine Membran aufweist, wobei das Volumen der in der Membran befindlichen Poren Teil des Volumens ist und nicht abgezogen wird. Beispielsweise hat eine genutzte kreisförmige Membran, wie diese in Spritzenvorsatzfiltern verbaut ist einen Durchmesser von 25 mm und eine Dicke von 0,15 mm. Diese weist also ein Membranvolumen von 73,6 mm3 auf. Mit Vorteil ist diese Bindungskapazität im, insbesondere über den gesamten, pH Wertbereich zwischen pH3 und pH10 gegeben.

Gelöst wird die Aufgabe auch durch eine Sorptions- und/oder Filtrationsvorrichtung, insbesondere Elektrosorptions- und/oder Elektrofiltrationsvorrichtung, beinhaltend eine, insbesondere chemisch, geladene Polymermembran mit einer ersten flächigen und porösen Beschichtung aus Metall auf zumindest einer Seite der Polymermembran und insbesondere eine Kontaktierung der Beschichtung aus Metall als Arbeitselektrode. Darüber hinaus weist die Vorrichtung eine Gegenelektrode auf. Insbesondere weist sie eine Kontaktierung einer zweiten Beschichtung aus Metall auf der der ersten Beschichtung gegenüberliegenden Seite der Membran als Gegenelektrode auf.

Vorteilhafterweise weist sie auch eine dritte Elektrode als Referenzelektrode auf. Bezüglich der der Beschichtung, der Gegenelektrode und des Anlegens der Spannungen gilt analog oben ausgeführtes, insbesondere ist die Vorrichtung zur entsprechenden Anlegen der Spannung(en) eingerichtet, insbesondere ist sie zur Durchführung des Verfahrens eingerichtet und weist dazu insbesondere eine entsprechend eingerichtete Steuerung auf, die insbesondere eingerichtet ist, die Spannung zwischen Elektrode (auch Arbeitselektrode, gebildet durch die Beschichtung aus Metall) und Gegenelektrode zu steuern und/oder den Fluss des ersten und/oder weiteren Fluids zu steuern.

Mit Vorteil ist die Gegenelektrode entweder durch eine weitere flächige, poröse Beschichtung aus Metall auf einer zweiten, der ersten Seite gegenüberliegenden Seite gebildet wird oder durch eine unter Zwischenlage eines isolierenden und permeablen Spacers angeordnete permeable Elektrode, insbesondere gebildet durch ein metallisches Netz, gebildet ist.

Bevorzug ist die Porosität der Polymermembran mit Beschichtung aus Metall bezogen auf die initiale Bubble Point Pore und/oder die mittlere Porengröße gegenüber der unbeschichteten Polymermembran zwischen 0,01 % und 20 %, insbesondere 0,01 und 1 % verringert und/oder beträgt die Dicke der Beschichtung aus Metall 5 bis 100nm und/oder liegt die Porengröße der unbeschichteten Polymermembran insbesondere im Bereich von 0,01 µm bis 15 µm.

Mit Vorteil weist die Sorptions- und/oder Filtrationsvorrichtung eine Vorrichtung zum Anlegen von Gleichspannung an der Arbeitselektrode (Beschichtung aus Metall) unter Vorhandensein einer Gegenelektrode.

Zur Unterstützung der Adsorption der, insbesondere chemisch, geladenen (gechargten) Membran wird die Gleichspannung auf der Arbeitselektrode insbesondere so gerichtet, dass sie der Ladung der Membran gleichgerichtet ist. Gleichgerichtet ist die Spannung insbesondere dann, wenn durch die Spannung die Adsorptionsfähigkeit und/oder das Zetapotential in Richtung von null weg verändert und/oder verstärkt wird und/oder wenn bei einer, insbesondere chemisch, negativ geladenen Membran die Arbeitselektrode oder Beschichtung aus Metall mit dem Minuspol verbunden ist und bei einer, insbesondere chemisch, positiv geladenen Membran die Arbeitselektrode oder Beschichtung aus Metall mit dem Pluspol verbunden ist.

Zur Desorption von Molekülen von der, insbesondere chemisch, geladenen (gechargten) Membran wird die Gleichspannung auf der Arbeitselektrode insbesondere so gerichtet ist, dass sie der Ladung der Membran entgegengerichtet ist. Entgegengerichtet ist die Spannung insbesondere dann, wenn durch die Spannung die Adsorptionsfähigkeit und/oder das Zetapotential in Richtung null verändert wird und/oder verringert wird und/oder wenn bei einer negativ geladenen Membran die Arbeitselektrode mit dem Pluspol einer Spannungsquelle verbunden ist und bei einer positiv geladenen Membran die Arbeitselektrode mit dem Minuspol verbunden ist. Dabei wird der jeweils andere Pol jeweils insbesondere mit der Gegenelektrode verbunden.

Besonders bevorzugt wird eine Elektrosorptions- und/oder Elektrofiltrationsvorrichtung in Form eines Spritzenvorsatzes oder Spritzenvorsatzfilters. Hier wirkt sich die Adsorptionsfähigkeit der Membran ohne Anlegen einer Spannung besonders vorteilhaft aus. Nach der Adsorption kann der Vorsatz dann durch Anlegen einer Spannung entladen werden, indem die adsorbierten Moleküle desorbiert werden.

Die mit Metall einseitig oder beidseitig beschichtete Membran kann vorteilhafterweise genauso verarbeitet werden, wie eine übliche Polymermembran. Diese kann sowohl in Spritzenvorsatzfiltern als flache Membran als auch in Kapsulen als gepleatete (gefaltete) Membran verarbeitet werden/sein.

Dabei wird die Arbeitselektrode insbesondere kontaktiert und der Kontakt über Vorrichtungen wie einen Draht oder eine dünne Metallfolie nach außen geführt, um mit einer Spannung versorgt zu werden. Genauso wird mit Vorteil mit der Gegenelektrode verfahren, die entweder die zweite Beschichtung auf der gegenüberliegenden Seite der Membran darstellt oder an einer anderen Stelle montiert wird/ist.

Eine so vorteilhafte Konstruktion erlaubt es Spritzenvorsatzfilter oder Kapsulen mit zwei Kontakten herzustellen, die von außen mit Spannung versorgt werden (können).

Gelöst wird die Aufgabe auch durch ein System aus Sorptions- und/oder Filtrationsvorrichtung und einer eine Vorrichtung zum Desorbieren mit einer Aufnahmevorrichtung zur Aufnahme der Polymermembran mit Metallbeschichtung der Sorptions- und/oder Filtrationsvorrichtung und zum Inkontaktbringen der aufgenommenen Polymermembran mit Metallbeschichtung der Sorptions- und/oder Filtrationsvorrichtung und einer Gegenelektrode mit einem ersten Fluid und aufweisend eine Vorrichtung zum Anlagen einer Gleichspannung zwischen der Metallbeschichtung und der Gegenelektrode, wobei die Gegenelektrode entweder Bestandteil der Sorptions- und/oder Filtrationsvorrichtung oder der Aufnahmevorrichtung ist. Mit einer solchen Vorrichtung, die insbesondere Mittel zum Spülen der Membran mit dem Fluid aufweist, lässt sich einfach und zuverlässig eine Desorption bewerkstelligen. Insbesondere weist die Vorrichtung auch Mittel zur Messung mindestens einer Konzentration in dem Fluid auf.

Gelöst wird die Aufgabe auch durch eine geladenen Polymermembran mit flächiger und poröser Beschichtung aus Metall zumindest auf einer ersten Seite der Polymermembran Bezüglich der Membran und ihrer oder ihren Beschichtung(en). gelten alle in Bezug auf die Membran der Vorrichtung oder des Verfahrens beschriebenen vorteilhaften Ausgestaltungen entsprechend.

Die Metallschicht(en) (Elektrode(n)) ist/sind/wird/werden insbesondere mittels Magnetronsputtern oder Bedampfung von Metallen direkt auf die Membran Oberseite und/oder Unterseite aufgebracht. Es besteht auch die Möglichkeit, nur eine Seite einer Membran mit einer Metallschicht zu versehen und die notwendige Gegenelektrode unabhängig von der Membran in der Nähe zu platzieren. Auch besteht die Möglichkeit eine Anordnung mit drei Elektroden zu realisieren, wobei die erste die Arbeitselektrode, die zweite die Gegenelektrode und die dritte die Gegenelektrode darstellt.

Die Erfindung betrifft, insbesondere chemisch, positiv und negativ geladene Membranen, die chromatographische Eigenschaften aufweisen. Diese Membrane dienen der chromatographischen Trennung von vorzugsweise geladenen Biomolekülen. In der Regel sind solche chemisch geladenen Membranen aus Polyamid gefertigt können aber auch aus anderen Polymeren gefertigt sein. Standardmembranen weisen typischerweise Porengrößen im Bereich von 0,2 µm bis 0,8 µm auf, können aber auch Porengrößen zwischen 0,01 µm und 10 µm aufweisen.

Eine Möglichkeit der Erreichung höherer Bindungskapazitäten besteht in der Anwendung von Multimembranstapeln typischerweise von 2 bis 10 Membranen (Fa Pall, Acrodisc) und/oder der Anwendung einer die Adsorption verstärkenden Spannung.

Insbesondere wird das Verfahren als Membranchromatographie mit chem. beidseitig metallisch beschichter Membran, bei denen die beiden Seiten gegeneinander isoliert sind und als Arbeitselektrode (AE), insbesondere upstream seitige Beschichtung, und Gegenelektrode (GE), insbesondere downstream seitige Beschichtung

Die Membran besteht insbesondere aus porösen Polymeren wie z.B. PES oder PA mit Porengröße von 0.05 bis 1 um mit einer typischen Dicke von 100 bis 150 µm (Bereich 10 bis 200 µm)

Um negativ geladene Moleküle zu in der Membran zu adsorbieren wird die Arbeitselektrode insbesondere auf ein positives und die Gegenelektrode auf ein negatives Potential gesetzt.

Um positiv geladene Moleküle zu in der Membran zu adsorbieren wird die Arbeitselektrode insbesondere auf ein negatives und die Gegenelektrode auf ein positives Potential gesetzt.

Es wird angenommen, dass das resultierende elektrische Feld zwischen Arbeits- und Gegenelektrode auf geladene Moleküle im Bereich der Arbeitselektrode zusätzliche attraktive Wechselwirkung und im Bereich der Gegenelektrode repulsive Wechselwirkung auswirkt.

Die Bindungskapazität kann durch serielle Anordnung mehrere Membranen, insbesondere 2 bis 10 Membranen, vergrößert werden

Typische Parameter der Adsorption sind:
- Transmembraner Fluss zwischen 1 und 50 ml/(cm²*bar*min), insbesondere bei einlagiger Membrananordnung
- Vorteilhafte Potentialdifferenzen zwischen Elektrode und Gegenelektrode zur Adsorption liegen im Falle negativer Moleküle im Bereich von +0,1 bis 30V, insbesondere + 1 bis + 10V.
- Vorteilhafte Potentialdifferenzen zwischen Elektrode und Gegenelektrode zur Adsorption liegen im Falle positiver Moleküle von -0,1 bis -30V, insbesondere -1 bis -10V.

Die Ablösung und Wiedergewinnung adsorbierter Moleküle kann alleine durch die beschriebene Potentialänderung bewirkt werden und erfordert keine Aufsalzung oder pH-Veränderung

Die Desorption und Elution vorher gebundener Moleküle geschieht insbesondere nach Austausch eines Volumens des ersten Fluids oder Passage eines Volumens des ersten Fluids und/oder Adsorption aus einem Volumen des ersten Fluids, wobei das Volumen geringer ist als das 10-fachem des Membranvolumens, wodurch folgende vorteilhafte Eigenschaften erzielt werden können
- Schnellere Wiedergewinnung, d.h. kürzere Prozesszeit
- Geringere Störwirkung von Diffusionsvorgängen.
- Höhere Molekülekonzentration als ohne Anlegen einer gleichgerichteten Spannung.
- Das Filtrat ist frei von störenden Elektrolyten (H⁺, OH⁻, KCl, NaCl) in höheren Konzentrationen.

- Der Prozess von Adsorption und Desorption führt zu einer hohen Wiedergewinnungsrate von > 95%
- Der Prozess von Adsorption und Desorption kann und/oder alleine durch Potentialänderung wiederholt werden, insbesondere mindestens 10 mal, insbesondere mindestens 20 mal.
- Die beschriebene Anordnung der schaltbaren Membran Chromatograghie-Vorrichtung kann zur Trennung von Molekülarten mit unterschiedlichen isoelektrischen Punkten verwendet werden, indem
   - Das elektrische Feld zwischen Arbeitselektrode und Gegenelektrode durch die Gleichspannung so eingestellt wird, dass
   - die attraktiven Wechselwirkung der stationären Phase größer für Molekülart 1 als für Molekülart 2 sind, so dass
   - Für Molekülart 1 eine größere Retention als für Molekülart 2 erreicht wird
- Beispiel: Im Falle von Molekülart 1 mit IEP (isoelektrischer Punkt) < 7 und Molekülart 2 mit IEP > 7 kann mit nur einer beidseitig metallisierten Membran und pH 7
   - Bei einer positiven Potentialdifferenz zwischen Arbeitselektrode (positiv) und Gegenelektrode (negativ)kann Molekülart 1 gebunden und Molekülart 2 eluiert werden
   - Bei einer negativen Potentialdifferenz zwischen Arbeitselektrode (negativ) und Gegenelektrode (positiv) Molekülart 2 gebunden und Molekülart 1 eluiert werden

In der Adsorptionsphase können typische Ströme zwischen Arbeitselektrode und Gegenelektrode im Bereich von 0,001 bis 1 mA pro cm² Membranfläche gemessen werden, in Abhängigkeit von Analyt- und Elektrolytkonzentration, Elektrodengleichspannung, Membrantyp, Konzentration und Flussrate (feed speed).

In der Desorptionsphase sind typische Ströme zwischen Arbeitselektrode und Gegenelektrode insbesondere höher als die Ströme bei Adsorption und liegen insbesondere im Bereich von - 0,01 bis -10 mA, insbesondere in Abhängigkeit von Analyt- und Elektrolytkonzentration, Elektrodengleichspannung, Membrantyp, Konzentration und Flussrate (feed speed).

Insbesondere bei Stoffkonzentrationen von mehr als 10E-5 mol/l besteht eine Korrelation zwischen dem gemessenen Elektrodenstrom und der Menge adsorbierter bzw. desorbierter Moleküle pro Zeiteinheit (Massentransport).

Der gemessene Elektrodenstrom kann deshalb herangezogen werden, um die Menge adsorbierter bzw. desorbierter Moleküle aufzuzeichnen. Damit kann die Membranbeladung so gesteuert werden, dass es in der Adsorptionsphase nicht zum Durchbruch kommt bzw. der Durchfluss und/oder die Adsorption vor dem Durchbruch gestoppt wird. Damit kann die Desorptionsphase so gestaltet werden, dass bei gewünschter Wiedergewinnung der Durchfluss und/oder die Desorption gestoppt wird

Vorteilhafte Ausgestaltungen sind:
- Membran beidseitig mit 0 bis 100 nm Au beschichtet und/oder
- Membranporengröße (typ. Pore, cut-off): 1-1000 nm und/oder
- Porosität: 10-95% und/oder
- Membrandicke bzw. Membranvolumen / effektive Filterfläche (cm): 0,005 bis 0,20 cm (Einfachmembranstapel bis Multistapel mit n = 1 bis n = 10) und/oder
- Stoffkonzentration im Feed: 10E-10 mg/ml (Endotoxine) bis 10 mg/ml (Proteine) und/oder
- Feedrate pro cm² effektiver Filterfläche: 0,1 bis 10 ml /(cm^{2*}min) und/oder
- Stofftransportrate pro cm² effektiver Filterfläche: 10E-11 bis 100 mg /(cm^{2*}min) und/oder
- Elektrolytkonzentration NaCl oder KaCl: 0 bis 10 mmol/I und/oder
- Stokesradius d. Analytmoleküls: 1 bis 20nm und/oder
- Molekülmassen: 100 bis 1000.000 g/mol und/oder
- Ungeladene oder positiv geladene Membran und Elektrodengleichspannung (Arbeitselektrode-Gegenelektrode) mit V > 0V und/oder
- Ungeladene oder negative geladene Membran und

Elektrodengleichspannung (Arbeitselektrode-Gegenelektrode) mit V < 0V Die beschriebene Methode ermöglicht zudem eine verstärkte Bindungskapazität (100% bis 1000%) von Polymermembranen durch die additive Wirkung des elektrischen Felds zwischen Elektrode und Gegenelektrode für die Fälle Die beschriebene Methode ermöglicht chromatographische Separation, insbesondere
- Separation positiv geladener von negativ geladenen Molekülen auf positiv geladenen Membranen mit positiver Arbeitselektrodengleichspannung, indem negativ geladenen Moleküle an der Membranoberfläche adsorbiert werden und positiv geladene Moleküle durch die Membran transmittieren
- Separation negativ geladener von positiv geladenen Molekülen auf positiv geladenen Membranen mit positiver Arbeitselektrodengleichspannung, indem positiv geladenen Moleküle an der Membranoberfläche adsorbiert werden und negativ geladene Moleküle durch die Membran transmittieren
- die Elution der jeweilig zurückhaltende Molekülart, nachdem die Elektrodengleichspannung umgepolt wird
- Erhöhung der Trennperformance (Bindungskapazität, Trennung unterschiedlicher Moleküle), wenn mehrere elektrisch schaltbare Einzelmembranen seriell gestapelt werden oder mehrere Einzelmodule in Reihe geschaltet werden
- im Falle mehrerer hintereinander geschalteter Membranen die Möglichkeit, für zumindest zwei, insbesondere jede Membran oder jede Gruppe von Membranen eine unterschiedliche Elektrodengleichspannung einzusetzen

Die beschriebene Methode ermöglicht im Vergleich zu herkömmlichen chromatographischen Membranen, die auf Ionenaustausch basieren, höhere Massentransferraten (Fluidvolumen und Analytmolekülmengen pro Zeiteinheit und pro effektives Membranbettvolumen), indem das wirksame elektrische Feld die Bindungskräfte und damit die Bindungskapazitäten vergrößert werden. Dadurch können höher konzentrierte Wirkstofflösungen aufgereinigt bzw. separiert werden.

Die Erfindung ermöglicht somit zahlreiche weitere Vorteile:
- Dadurch spielen Diffusionseffekte für die Belegung freier Oberflächenbindungsplätze eine geringere Rolle als bei reiner Ionenchromatographie
- Dadurch können die vorhandenen Membranporen effizienter und mehrlagig mit Adsorbatmolekülen gefüllt werden
- Dadurch kann eine Membrananordnung mit einer oder wenigen gestapelten Membranen eine höhere Bindungskapazität als ein vergleichbarer Aufbau ohne Potentialkontrolle erreichen
- Dadurch ist der transmembrane Widerstand bei gleicher Bindungskapazität geringer
- Dadurch liegt die dynamische Bindungskapazität pro Membran bei gegebener Flussrate und Molekülekonzentration näher bei der statischen Bindungskapazität als bei reinem Ionenaustausch
- Dadurch ergeben sich höhere Flussraten und kürzere Separationsdauern
- Der gemessene Elektrodenstrom (zwischen Arbeitselektrode und Gegenelektrode), insbesondere unter Voraussetzung einer hoch leitfähigen Metallbeschichtung, z.B., aus Gold, insbesondere beidseitiger Metallbeschichtung und Verwendung der beiden Beschichtungen als Elektrode und Gegenelektrode, hängt von folgenden Parametern ab:
   - Effektive Membranfläche bzw. Membranbettvolumen
   - Elektrodenabstand
   - Basiselektrolytkonzentration
   - Konzentration und effektive Nettoladung der Moleküle im feed
   - Flussrate

Damit korreliert der gemessene Elektrodenstrom mit der Anzahl adsorbierter geladener Moleküle pro Zeit. Damit ermöglicht die Strommessung in der beschriebenen Methode die Detektion und Kontrolle der verbleibenden Bindungskapazität. Damit ist eine Steuerung des Zustroms in Hinblick auf den späteren Durchbruch möglich und wird insbesondere eine solche verwendet. Damit kann eine effiziente und effektive Beladung der Membran erreicht werden Die beschriebene Methode ermöglicht Desorption geladener Moleküle
- ohne Salzkonzentrationen (typischerweise in der Größenordnung von 1 M NaCl oder KCI)
- ohne pH-Verschiebung auf pH < 4 für negativ und auf pH > 10 für positiv geladene Moleküle
- Das resultierende Filtrat mit den (Wirkstoff)Molekülen enthält keine bis geringe (typischerweise 1 mmol/I NaCl oder KCI oder weniger) Ionen
- Das resultierende Filtrat mit den (Wirkstoff)Moleküle kann einen moderaten pH-Wert aufweisen, insbesondere im Bereich 6 bis 8
- Die beschriebene Methode ermöglicht eine konzentrierte Freigabe von in der Membran gebundenen Moleküle, d.h. das Elutionsvolumen beträgt typischerweise nur wenige (insbesondere bis 10) Membranvolumina bzw. Austauschvolumina, insbesondere
   - Durch Sprung von positivem auf negatives Potential (Arbeits-GegenElektrode) für negativ geladene Moleküle
   - Durch Sprung von negativem auf positives Potential (Arbeits-GegenElektrode) für positiv geladene Moleküle
- Dadurch werden folgende Trenneigenschaften erreicht
   - Kurze Retentionszeit nach Potentialswitch
   - Sehr geringes Wiedergewinnungsvolumen
   - Hohe Wiedergewinnungsrate im Vergleich zu reiner Ionenchromatographie
   - Starke Aufkonzentration, insbesondere 1 bis 1000fach, insbesondere größer als 10fach, des Filtrats gegenüber der Eingangslösung
- Desorption kann durch Steigerung des Durchflusses, insbesondere 10fach gegenüber Startfluss zur Adsorption, beschleunigt werden
- Der Messstrom zwischen Arbeits- und Gegenelektrode, der mit der Desorptionsrate korreliert kann zur Steuerung des

Wiedergewinnungsprozesses verwendet werden.
- Die beschriebene Methode ermöglicht die wiederkehrende Adsorption und Desorption geladener Moleküle, indem
   - Zur Wiederherstellung einer freien Membranoberfläche keine chemische Regeneration der Membran erforderlich ist
   - Eine Bindungskapazität von > 90% der ursprünglichen Bindungskapazität und eine entsprechende Wiedergewinnung der Moleküle durch Potential-Switch, der insbesondere mindestens 10 mal erfolgt, das heißt Adsorption und Desorption erfolgten insbesondere mindestens 10 mal an der gleichen Membran, insbesondere unmittelbar aufeinanderfolgend

Beispiel 1:

Es wurde eine handelsübliche chemisch positiv geladene (gechargte) Membran (Membran 1, Hersteller Pall Corp. Handelsname Mustang-Membran) als Vergleich zu einer mit Elektroden versehenen handelsüblichen positiv gechargten Membranen eines anderen Herstellers (Membran 2) gewählt. Beide Membranen sind aus Polyamid und weisen eine ähnliche Bindungskapazität gegenüber Albumin auf. Es wurde ein Versuch zur Adsorption und Desorption von BSA durchgeführt:
Die handelsübliche Membran 1 erreichte eine Bindungskapazität von 60 mg BSA je ml Membranvolumen. Die mit einer beidseitigen Metallschicht aus Gold von 40nm versehene Membran 2 erreichte eine Bindungskapazität von 100 mg BSA je ml Bettvolumen. Die Unterschiede lassen sich durch die unterschiedlichen Produkte unterschiedlicher Hersteller erklären.

Das adsorbierte BSA auf der Membran 1 wurde mit einer 1 Molaren Salzlösung wieder desorbiert. Die Wiederfindungsrate lag zwischen 95% und 96%.

Das adsorbierte BSA auf der Membran 2 wurde durch Anlegen einer negativen Gleichspannung von - 3 Volt an der Oberseite (upstream) der Membran desorbiert. Die Gegenelektrode befand sich an der Unterseite der Membran (downstream). Die Wiederfindungsrate lag zwischen 95% und 96%.

### Beispiel 2:

Eine gleiche positiv gechargte Membran (Membran 1, Hersteller Pall Corp. Handelsname Mustang-Membran) wurde mit einer beidseitigen Metallschicht aus Gold versehen und es wurde ein Versuch zur Adsorption und Desorption mit Albumin durchgeführt. Dabei wurde zur Adsorption eine Gleichspannung von a. +2 Volt und b. +3 Volt angelegt. Bei dem Versuch mit a. + 2 Volt konnten 120 mg BSA je ml und mit der Gleichspannung b. + 3 Volt konnten 161 g BSA/ml adsorbiert werden. Damit konnte gegenüber der Membran2 ohne positive Gleichspannung (Beispiel 1) 20 % bei einer Gleichspannung von + 2 Volt und 60% mehr BSA bei einer positiven Gleichspannung von +3 Volt adsorbiert werden. Das bedeutet, dass durch eine zusätzlich positive Gleichspannung, die an der Metallschicht angelegt wurde, die Bindungskapazität der chemisch positiv geladenen Membran um bis zu 60% gesteigert werden konnte.

Zudem wurde der Stromfluss während der Versuche gemessen. Bei dem Versuch mit a. +2 Volt wurde ein Stromfluss zu Beginn der Adsorption von BSA von 2 mA gemessen. Dieser nahm über die Zeit bis zum Durchbruch kontinuierlich ab und betrug bei Erreichen der Bindungskapazität 0 mA. Bei dem Versuch mit b. +3 Volt wurde ein Stromfluss zu Beginn der Adsorption von BSA von 8 mA gemessen. Dieser nahm über die Zeit bis zum Durchbruch kontinuierlich ab und betrug bei Erreichen der Bindungskapazität 0 mA. Dies bedeutet, dass der Stromfluss als Messgröße für die Auslastung der Bindungskapazität genutzt werden kann. Die Desorption der BSA Moleküle erfolgte bei beiden Versuchen (a und b) über eine Umschaltung der Gleichspannung auf -3 Volt. Die Wiederfindungsrate der BSA Moleküle lag zwischen 95% und 96%.

Die Beispiele zeigen, dass erfindungsgemäß an eine chemisch positiv geladene Membran adsorbierte Biomoleküle (BSA) mittels Anlegen einer negativen Gleichspannung wieder desorbiert werden können.

Weiterhin kann die Bindungskapazität einer chemisch positiv geladenen Membran durch das zusätzliche Anlegen einer positiven Gleichspannung zwischen +2 Volt und +3 Volt um bis zu 60% gegenüber der Verwendung einer nur chemisch positiv geladenen Membran gesteigert werden.

Zudem konnte überraschend ermittelt werden, dass der Stromfluss zwischen den Elektroden (Membranoberseite und Membranunterseite) während der Adsorption von chemisch positiv geladenen Membrane, die mit einer elektrischen Gleichspannung über die auf der Membran applizierte Metallschicht versorgt wurde, als Messgröße für die Auslastung der Bindungskapazität und/oder für die verbleibende Bindungskapazität dienen kann.

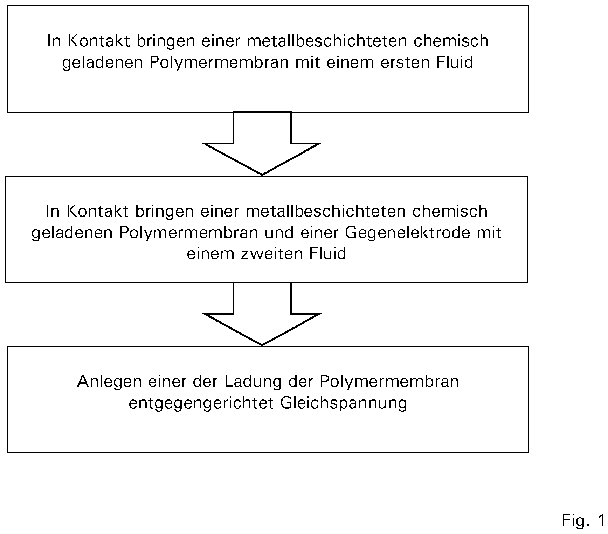

Figur 1 veranschaulicht rein exemplarisch und schematisch einen erfindungsgemäßen Verfahrenslauf.

## Patentansprüche

1. Verfahren zur Separation mindestens eines geladenen Stoffs, insbesondere Biomolekül, mittels Adsorption an und Elektrodesorption von einer chemisch geladenen Polymembran umfassend die folgenden Schritte
a. Bereitstellen der chemisch geladenen Polymermembran;
b. In Kontakt bringen der Polymermembran mit mindestens einem ersten Fluid, beinhaltend den mindestens einen geladenen Stoff und Adsorbieren des mindestens einen geladenen Stoffs an die Polymermembran;
c. Erzeugen eines elektrischen Feldes zur Desorption des mindestens einen geladenen Stoffs von der Polymermembran.

2. Verfahren nach Anspruch 1, wobei es sich bei der Polymermembran um eine Anionen- oder Kationenaustauscherpolymermembran handelt.

3. Verfahren nach einem der vorstehenden Ansprüche, **dadurch gekennzeichnet, dass** das erste Fluid zwischen Beginn des Schritts b und Begin des Schritts c zumindest teilweise entfernt wird und/oder zumindest teilweises durch die Polymermembran passiert wird, wobei insbesondere mindestens 10% des ersten Fluids und/oder mindestens 5 ml des ersten Fluids entfernt werden oder passieren und/oder Schritt b und/oder Schritt d mindestens 1 Sekunde, insbesondere mindestsens 30 Sekunden, lang durchgeführt wird.

4. Verfahren nach einem der vorstehenden Ansprüche, **dadurch gekennzeichnet, dass** die Polymermembran vor oder während Schritt c mit mindestens einem zweiten Fluid in Kontakt gebracht wird, wobei das zweite Fluid insbesondere ein Solvent, insbesondere reines Solvent ist und/oder den geladenen Stoff nicht enthält, insbesondere keine Biomoleküle enthält.

5. Verfahren nach einem der vorstehenden Ansprüche, **dadurch gekennzeichnet, dass** zur Erzeugung des elektrischen Feldes eine Elektrode und eine Gegenelektrode bereitgestellt werden und zwischen der Elektrode und der Gegenelektrode eine Gleichspannung angelegt wird.

6. Verfahren nach Anspruch 5, wobei die Gleichspannung mit zur Ladung der Polymermembran entgegengerichteter Ladung an die Elektrode angelegt wird.

7. Verfahren mach Anspruch 5 oder 6, wobei der Betrag der Gleichspannung im Bereich von 10mV und 3V liegt.

8. Verfahren nach einem der Ansprüche 5 bis 7, wobei die Elektrode entweder durch eine erste flächige, poröse Beschichtung aus Metall auf einer zweiten Polymermembran oder durch eine unter Zwischenlage eines isolierenden und permeablen Spacers angeordnete permeable Elektrode, insbesondere gebildet durch ein metallisches Netz, gebildet wird und/oder wobei die Gegenelektrode entweder durch eine zweite flächige, poröse Beschichtung aus Metall auf einer dritten Polymermembran oder durch eine unter Zwischenlage eines isolierenden und permeablen Spacers angeordnete permeable Elektrode, insbesondere gebildet durch ein metallisches Netz, gebildet wird und/oder
wobei die Elektrode auf einer ersten Seite der Polymermembran und die Gegenelektrode auf einer zweiten, der ersten Seite gegenüberliegenden Seite der Polymermembran angeordnet wird.

9. Verfahren nach einem der vorstehenden Ansprüche, wobei die geladene Membran ein Bindungskapazität von mindestens 25 mg Lysozyme oder Albumin, insbesondere BSA, pro ml Membranvolumen aufweist.

10. Sorptions- und/oder Filtrationsvorrichtung, insbesondere Elektrosorptions- und/oder Elektrofiltrationsvorrichtung, beinhaltend eine chemisch, geladene Polymermembran, eine Elektrode auf einer ersten Seite der Polymermembran und insbesondere eine Gegenelektrode.

11. Elektrosorptions- und/oder Elektrofiltrationsvorrichtung nach Anspruch 10, wobei die Elektrode entweder durch eine erste flächige, poröse Beschichtung aus Metall auf einer zweiten Polymermembran, gebildet wird oder durch eine unter Zwischenlage eines isolierenden und permeablen Spacers angeordnete permeable Elektrode, insbesondere gebildet durch ein metallisches Netz, gebildet ist und/oder wobei die Gegenelektrode entweder durch eine zweite flächige, poröse Beschichtung aus Metall auf einer dritten Polymermembran gebildet wird oder durch eine unter Zwischenlage eines isolierenden und permeablen Spacers angeordnete permeable Elektrode, insbesondere gebildet durch ein metallisches Netz, gebildet ist und/oder
wobei die Gegenelektrode auf einer zweiten, der ersten Seite gegenüberliegenden Seite der Polymermembran angeordnet ist.

12. Elektrosorptions- und/oder Elektrofiltrationsvorrichtung nach einem der Ansprüche 10 bis 11, umfassend eine Vorrichtung zum Anlegen von Gleichspannung zwischen der Elektrode und der Gegenelektrode, wobei die Gleichspannung insbesondere so gerichtet ist, dass sie an der Elektorde der Ladung der Polymermembran entgegengerichtet ist.

13. Elektrosorptions- und/oder Elektrofiltrationsvorrichtung nach einem der Ansprüche 10 bis 12, wobei der Elektrosorptions- und/oder Elektrofiltrationsvorrichtung als Spritzenvorsatz und/oder Spritzenvorsatzfilter ausgestaltet ist, ausgestaltet, sodass durch den Spritzenvorsatz bewegte Flüssigkeit durch und/oder an der Polymermembran vorbeigeführt ist.

14. System aus einer Sorptions- und/oder Filtrationsvorrichtung beinhaltend eine chemisch geladene Polymermembran und einer Vorrichtung zum Desorbieren mit einer Aufnahmevorrichtung zur Aufnahme der Polymermembran der Sorptions- und/oder Filtrationsvorrichtung und zum Inkontaktbringen der aufgenommenen Polymermembran der Sorptions- und/oder Filtrationsvorrichtung, einer Elektrode und einer Gegenelektrode mit einem Fluid und aufweisend eine Vorrichtung zum Anlagen einer Gleichspannung zwischen der Elektrode und der Gegenelektrode, wobei die Elektrode und/oder die Gegenelektrode entweder Bestandteil der Sorptions- und/oder Filtrationsvorrichtung oder der Aufnahmevorrichtung ist.
